(19) Europäisches Patentamt

European Patent Office

Office européen des brevets

(11) Veröffentlichungsnummer: **0 119 565**
**B1**

(12) # EUROPÄISCHE PATENTSCHRIFT

(45) Veröffentlichungstag der Patentschrift:
01.06.88

(21) Anmeldenummer: **84102602.4**

(22) Anmeldetag: **09.03.84**

(51) Int. Cl.⁴: **G 01 N 21/89**, G 01 N 21/47

(54) Optische Prüfvorrichtung zur Fehlerortung in Kabel- und Leitungsoberflächen.

(30) Priorität: **17.03.83 DE 3309629**

(43) Veröffentlichungstag der Anmeldung:
**26.09.84 Patentblatt 84/39**

(45) Bekanntmachung des Hinweises auf die Patenterteilung:
**01.06.88 Patentblatt 88/22**

(84) Benannte Vertragsstaaten:
**CH DE GB LI**

(56) Entgegenhaltungen:
**DE - A - 2 637 375**

**PATENTS ABSTRACTS OF JAPAN, Band 5, Nr. 177
(P-89)[849], 13. November 1981**

(73) Patentinhaber: **Siemens Aktiengesellschaft Berlin und
München, Wittelsbacherplatz 2, D-8000 München 2 (DE)**

(72) Erfinder: **Schneider, Richard, Dr., Egerländer Strasse 5,
D-8028 Taufkirchen (DE)**

## Beschreibung

Die Erfindung betrifft eine optische Prüfvorrichtung zur Fehlerortung in Kabel- und Aderoberflächen mit einer Lichtquelle, die die Oberfläche des Prüflings ringförmig beleuchtet, und mittels Halbschalen und Fotodetektoren das rückgesteuerte Licht erfasst.

Bei der Fertigung von elektrischen Kabeln wird mit Hilfe von Extrudern eine Isolierung auf die Kabelseele bzw. auf den Leiter aufgebracht. Dabei können in der Oberfläche der Isolierung Fehler entstehen, die das Isolationsverhalten beeinträchtigen oder auch durch ihr Aussehen beim Kunden den subjektiven Eindruck eines qualitativ minderwertigen Kabels hervorrufen.

Wegen der relativ hohen Abzugsgeschwindigkeiten aus modernen Extrudern ist es für einen Menschen nicht möglich, die gesamte Oberfläche der schnell bewegten Kabel visuell zu überprüfen.

Zur Zeit ist nur von Kabelherstellern bekannt, dass sie Kabeloberflächen optisch prüfen. Nach einem Verfahren wird in vier Richtungen der Durchmesser bestimmt. Hierbei können weder Löcher detektiert noch Kabel mit nicht kreisförmigem Querschnitt geprüft werden, da sich die Kabel um ihre Längsachse drehen können.

Bei einem anderen Verfahren wird das an Unebenheiten der Oberfläche gestreute Licht detektiert. Hierzu werden vier bzw. sechs sternförmig angeordnete Lampen und Empfängereinheiten benötigt. Es existieren zwei verschiedene Arten von Empfängern: der eine tastet optisch mit Hilfe eines Spaltes einen Streifen ab, dessen Länge etwa einem Sechstel des Kabelumfanges entspricht. Dies verursacht ein ungünstiges Signal/ Rausch-Verhältnis. Der andere tastet mit Hilfe eines rotierenden Spiegels punktweise einen Streifen entlang des Umfanges ab, erreicht aber vermutlich wegen der erforderlichen Spiegelgrösse nicht ausreichend hohe Geschwindigkeiten.

In der DE-PS 2 637 375 ist ein optisches Oberflächenprüfgerät, insbesondere zur Prüfung eines emaillierten Drahtes, beschrieben und dargestellt. Dabei wird das Licht von einer oder mehreren Lichtquellen durch Linsen und Spiegel auf eine schmale Ringzone auf der Oberfläche des Prüflings fokussiert. Glatte Oberflächen reflektieren das Licht in die gleiche Ebene wie das einfallende Licht. Unregelmässigkeiten in der Oberfläche bewirken, dass das reflektierte Licht auf sphärodiale Spiegel gerichtet und zwangsläufig auf Fotoelemente fokussiert wird. Diese Vorrichtung kann nur bei kleinen Drahtdurchmessern verwendet werden, da bei grösseren Durchmessern die Fokussierung auf die Empfänger nicht mehr gewährleistet ist. Die wesentlichen Unterschiede zur vorliegenden Erfindung bestehen darin:

1. dass bei der bekannten Anordnung eine Ringzone mit einem konstanten Lichtstrom beaufschlagt wird, während bei der Erfindung eine Ringzone punktförmig, seriell mit einem Laserstrahl abgetastet wird. Hierdurch wird die Detektierbarkeit kleiner Fehler erhöht.

2. Die bekannte Anordnung enthält zwei Teilellipsoide, die durch Reflektion die Kabeloberfläche auf die Photodetektoren abbilden. Die Erfindung enthält zwei Halbkugeln, die mittels diffuser Streuung das Licht auf die zwei Photodetektoren leiten. Dadurch können Kabel verschiedenster Durchmesser geprüft werden.

3. Die bekannte Anordnung addiert die Ausgangssignale der Photodetektoren und erzeugt bei Überschreitung der Summe über eine Schwelle ein Fehlersignal. Die vorliegende Anordnung nach der Erfindung bildet hingegen die Differenz zwischen den beiden Photodetektorsignalen und erzeugt bei Überschreiten der Differenz über eine Schwelle ein Fehlersignal. Auf diese Weise verursachen Änderungen in der Farbe des Kabels keine Fehlermeldung. Änderungen in der Form des Kabels, insbesondere Unebenheiten in axialer Richtung des Kabels werden hervorgehoben.

Der Erfindung liegt die Aufgabe zugrunde, die eingangs definierte Oberflächenprüfvorrichtung zur berührungslosen Erfassung sichtbarer Oberflächendefekte an Leitungen und Kabeln zu realisieren und bei Auftreten eines Fehlers ein elektrisches Signal abzugeben. Dies geschieht nach der Erfindung dadurch, dass zur Messung der Richtungsabhängigkeit des Streulichts ein aus zwei durch Wände voneinander getrennnten Halbschalen bestehender Empfänger vorgesehen ist, der den Prüfling allseitig umschliesst und innen mit einer diffus streuenden Schicht belegt ist, dass ferner radial zu dem Prüfling zwischen den Trennwänden der Halbschalen ein ringförmiger Spalt für den abtastenden Lichtstrahl vorgesehen ist und symmetrisch zu diesen Wänden am Umfang der Halbschalen mindestens je ein Fotodetektor angeordnet ist. Mit der Vorrichtung nach der Erfindung ist es nicht nur möglich, dünne Drähte, sondern auch schnell bewegte Kabel von einigen Zentimetern Durchmesser allseitig zu prüfen.

Weitere Einzelheiten der Erfindung ergeben sich aus den Unteransprüchen und der Beschreibung.

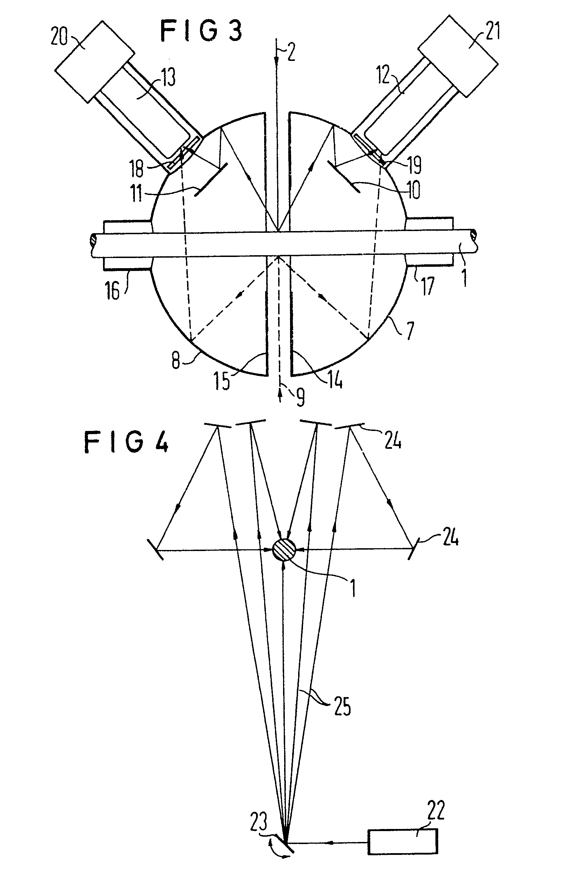

Die Erfindung wird anhand der Figuren 3 und 4 erläutert. Als Prüfling ist ein Kabel angenommen. Es zeigen:

Fig. 1 das Streuverhalten einer einwandfreien, glatten Kabeloberfläche,

Fig. 2 das Streuverhalten eines Loches im Kabelmantel,

Fig. 3 eine Prinzipskizze einer Empfangseinrichtung nach der Erfindung und

. Fig. 4 eine Prinzipskizze eines Laserscanners zum allseitigen Abscannern eines Kabels.

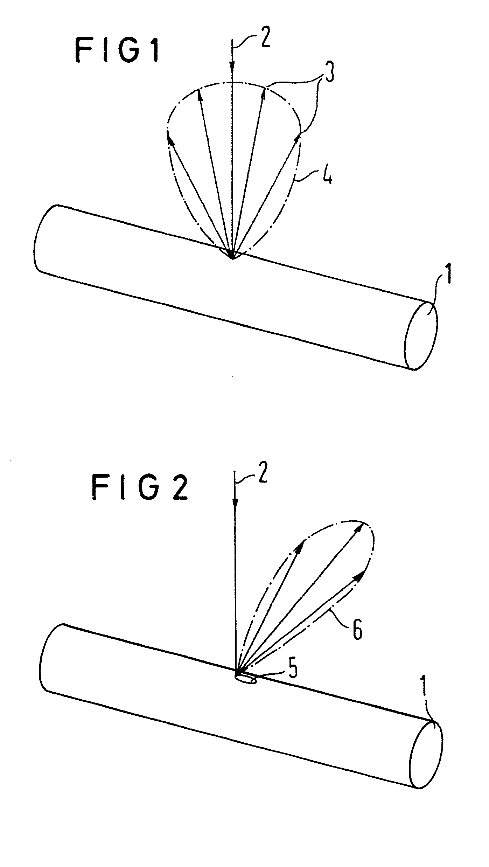

In den Figuren 1 und 2 ist mit 1 ein Abschnitt eines Kabels bezeichnet. Von einer einwandfreien, glatten Oberfläche dieses Kabels wird ein senkrecht auftreffender Lichtstrahl 2 gleichmässig gestreut. Die Streurichtungen 3 weisen eine Symmetrie auf, deren Spiegelebene senkrecht zur Achse des Kabels steht. Die gestrichelte Umhüllung 4 beschreibt dementsprechend eine symmetrische Fläche zu beiden Seiten des einfallenden Lichtstrahles.

Bei einem Defekt 5, zum Beispiel einem Loch im Kabelmantel, wird die Symmetrie des Streuverhaltens verletzt. Die Umhüllende 6 des Streulichts umfasst eine Fläche, die nach der Darstellung in der Figur 2 vollständig auf der rechten Seite des einfallenden Lichtstrahls liegen kann.

Die Figur 3 zeigt einen kugelförmigen Empfänger, der aus zwei Halbschalen 7 und 8 besteht. Zwischen den Halbschalen ist ein Spalt, durch den der Lichtstrahl 2, zum Beispiel ein Laserstrahl in den Empfänger eintreten kann. Mit 9 ist der gleiche Lichtstrahl aus einer anderen Richtung kommend bezeichnet. An der Innenseite der Oberflächen der Halbschalen sind mindestens je ein Fotoempfänger 12, 13, zum Beispiel Fotomultiplier, symmetrisch angebracht, um das gestreute Laserlicht zu detektieren. Die Trennwände 14 und 15 verhindern, dass das Streulicht von einer Halbschale in die andere übertreten kann. Diese Trennwände besitzen in ihrer Mitte je eine Öffnung, die den Prüfling passieren lässt und dem an der Kabeloberfläche gestreuten Licht erlaubt, in die jeweilige Halbkugel einzutreten. Je eine Blende 10 und 11 schützen die Fotomultiplier von direkten Lichtreflexen. Diese Blenden können auch im Gegensatz zur Darstellung in der Figur 3 an den erwähnten Trennwänden 14, 15 angebracht werden. Zwei Rohrstutzen 16, 17 in Verbindung mit Interferenzfiltern 18, 19 schützen die Fotoempfänger vor Störungen durch Umgebungslicht. Mit 20, 21 sind Vorverstärker für die Fotomultiplier angedeutet.

Die Figur 4 zeigt die Strahlführung des Laserlichts, das von einem Laser 22 stammt. Ein Schwingspiegel 23 lenkt das Licht nacheinander auf verschiedene Spiegel 24, die das Licht auf den Prüfling 1 reflektieren. Verschiedene Laserstrahlen entsprechend verschiedenen Positionen des Schwingspiegels 23 sind mit 25 bezeichnet.

Die in der Figur 3 dargestellten, gestreuten Lichtstrahlen stammen von einer glatten, einwandfreien Oberfläche. Die Streurichtungen weisen eine Symmetrie auf, deren Spiegelebene senkrecht zur Achse des Kabels steht.

Falls in der Oberfläche des Prüflings ein Defekt vorliegt (5, Figur 2), wird in die eine Halbschale (Figur 3) mehr Licht gestreut als in die andere. Somit fällt auf den einen Fotomultiplier mehr Licht als auf den anderen.

Daraus resultierende, unterschiedliche Ausgangssignale der Fotomultiplier werden in einer Dividier- oder Subtrahiererschaltung miteinander verglichen. Falls der Unterschied eine vorgegebene Schwelle überschreitet, wird eine Fehlermeldung abgegeben.

Damit der mittlere Pegel der Ausgangssignale der Fotomultiplier bei einwandfreien Kabeloberflächen nicht durch deren unterschiedliche Streuvermögen, zum Beispiel verschiedene Farben, beeinflusst wird, und somit sich die Fehlernachweisgrenze nicht verschieben kann, ist eine Regelelektronik vorgesehen, die bei Abweichung der zeitlich gemittelten Pegel von einem vorgegebenen Schwellwert die Verstärkung der Fotomultiplier nachstellt. Dies wird erreicht durch Verändern der Hochspannung für die Fotomultiplier.

Ein weiterer Vorteil dieser Regelung ist, dass sie eine Überlastung bzw. Zerstörung der Fotomultiplier verhindert.

Die gesamte Vorrichtung ist mechanisch so aufgebaut, dass die zwei Halbkugeln aufgeklappt werden können.

Dadurch wird es ermöglicht, zu Beginn des Fertigungsprozesses des Kabels den Kabelanfang einzulegen. Ausserdem wird beim Auftreten von Knoten im Kabel ein Zerstören der Kugel vermieden.

Nach einer weiteren Ausbildung der Erfindung kann eine lichtdurchlässige, aufklappbare Umhüllung den Prüfling umschliessen und die Empfängeranordnung von Verschmutzung und Beschädigung schützen.

**Patentansprüche**

1. Optische Prüfvorrichtung zur Fehlerortung in Kabel- und Leistungsoberflächen mit einer Lichtquelle (22), die die Oberfläche des Prüflings (1) ringförmig beleuchtet, und mit Halbschalen (7, 8) und Fotodetektoren (12, 13), die das rückgestreute Licht erfassen, wobei zur Messung der Richtungsabhängigkeit des Streulichts eine zweiteilige Empfangsanordnung vorgesehen ist, die aus zwei Halbschalen (7, 8) mit Ein- und Austrittsöffnungen für den Prüfling besteht, dadurch gekennzeichnet, dass die beiden Halbschalen durch Wände (14, 15) voneinander getrennt sind, den Prüfling radial umschliessen und innen mit einer diffus streuenden Schicht belegt sind, dass ferner radial zu dem Prüfling zwischen den Trennwänden (14, 15) der Halbschalen ein ringförmiger Spalt für den abtastenden Lichtstrahl (2, 9) vorgesehen ist und symmetrisch zu diesen Wänden an der Innenseite der Oberflächen der Halbschalen mindestens je ein Fotodetektor (12, 13) angeordnet ist und dass ausserdem in den Trennwänden Öffnungen sind, um neben dem Prüfobjekt auch das Streulicht vom Prüfling zu den Detektoren passieren zu lassen, wobei die Trennwände den Übertritt von Streulicht aus einer Halbschale in die andere verhindern.

2. Prüfvorrichtung nach Anspruch 1, dadurch gekennzeichnet, dass weitere Blenden (10, 11) die Photodetektoren (12, 13), zum Beispiel Fotomultiplier, vor direkten Lichtreflexen schützen.

3. Prüfvorrichtung nach Anspruch 1, dadurch gekennzeichnet, dass zur Beleuchtung ein Laserstrahl (2, 9) dient, der seriell, punktförmig, und nahezu radial auftreffend die Oberfläche des Prüflings (1) abtastet.

4. Prüfvorrichtung nach Anspruch 3, dadurch gekennzeichnet, dass ein Schwingspiegel (23) vorgesehen ist, der das Licht nacheinander auf verschiedene Spiegel (24) lenkt, die ihrerseits das Licht nahezu radial auf den Prüfling (1) reflektieren.

5. Prüfvorrichtung nach Anspruch 4, dadurch gekennzeichnet, dass Auswerteschaltmittel vorgesehen sind, die den Unterschied zwischen den Ausgangssignalen der Fotomultiplier (12, 13) ermitteln und beim Vorliegen eines Unterschiedes eine Fehlermeldung abgeben.

6. Prüfvorrichtung nach Anspruch 5, dadurch gekennzeichnet, dass als Auswerteschaltmittel ein Dividierer mit nachgeschaltetem Schwellwertglied vorgesehen ist, der das Ausgangssignal des Dividierers mit einem gegebenen Schwellwert vergleicht.

7. Prüfvorrichtung nach Anspruch 5, dadurch gekennzeichnet, dass als Auswerteschaltmittel ein Subtrahierer mit nachgeschaltetem Schwellwertglied vorgesehen ist, der das Ausgangssignal des Subtrahierers mit einem gegebenen Schwellwert vergleicht.

8. Prüfvorrichtung nach Anspruch 5, dadurch gekennzeichnet, dass eine Regelelektronik vorgesehen ist, die das zeitlich gemittelte Ausgangssignal der Fotomultiplier (12, 13) mit einem vorgegebenen Schwellwert vergleicht und bei Anwendung die Hochspannung, das heisst die Verstärkung der Fotomultiplier, nachstellt.

9. Prüfvorrichtung nach Anspruch 2, dadurch gekennzeichnet, dass an der Eintritts- und Austrittsöffnung der Halbschalen (7, 8) angebrachte Blenden (16, 17) sowie Filter (18, 19) unmittelbar vor den Fotomultipliern (12, 13) diese vor Fremdlicht schützen.

10. Prüfvorrichtung nach Anspruch 1, dadurch gekennzeichnet, dass die Halbschalen (7, 8) aufklappbar sind.

1. Prüfvorrichtung nach Anspruch 1, dadurch gekennzeichnet, dass eine lichtdurchlässige, aufklappbare Umhüllung den Prüfling (1) umschliesst und den Empfänger vor Verschmutzung und Beschädigung schützt.

## Claims

1. An optical testing device for fault location in cable and conductor surfaces comprising a light source (22) which illuminates the surface of the object to be tested (1) in annular fashion, and picks up back-scattered light by means of half-shells (7, 8) and photo-detectors (12, 13), where a two-part receiving arrangement is provided to measure the direction dependency of the scattered light, where the receiving arrangement consists of two half-shells (7, 8) provided with inlet and outlet openings for the object to be tested, characterised in that the two half-shells are separated from one another by walls (14, 15), radially enclose the object to be tested, and are internally coated with a coating which has a scattering effect, that moreover a ring-shaped gap is provided for the scanning light beam (2, 9) radially to the object to be tested between the partition walls (14, 15) of the half-shells and at least one respective photo-detector (12, 13) is arranged symmetrically to these walls on the inside of the surfaces of the half-shells, and the partition walls are provided with openings which permit the passage not only of the object to be tested but also that of light scattered from the object to be tested to the detectors, where the partition walls prevent scattered light from passing from one half-shell into the other.

2. A testing device as claimed in Claim 1, characterised in that further diaphragms (10, 11) protect the photo-detectors (12, 13), for example photo-multipliers, from direct light reflection.

3. A testing device as claimed in Claim 1, characterised in that a laser beam (2, 9) serves as an illuminating means which scans the surface of the object to be tested (1) in serial fashion, point-by-point, and so as to be radially incident upon.

4. A testing device as claimed in Claim 3, characterised in that an ascillatory mirror (23) is provided which guides the light consecutively towards different mirrors (24) which themselves reflect the light virtually radially onto the object to be tested (1).

5. A testing device as claimed in Claim 4, characterised in that analysis switching means are provided which determine the difference between the output signals of the photo-multipliers (12, 13) and emit a fault message in the event of a difference existing.

6. A testing device as claimed in Claim 5, characterised in that the analysis switching means consists of a divider followed by a threshold value component which compares the output signal of the divider with a predetermined threshold value.

7. A testing device as claimed in Claim 5, characterised in that the analysis switching means consists of a substractor followed by a threshold value component which compares the output signal of the substractor with a predetermined threshold value.

8. A testing device as claimed in Claim 5, characterised in that an electronic regulating unit is provided to compare the time-averaged output signal of the photo-multipliers (12, 13) with a predetermined threshold value, and in the event of a deviation adjusts the high voltage, i.e. the amplification of the photo-multipliers.

9. A testing device as claimed in Claim 2, characterised in that diaphragms (16, 17) are arranged in the inlet and outlet openings of the half-shells (7, 8), and filters (18, 19) which directly precede the photo-multipliers (12, 13) protect the latter from ambient light.

10. A testing device as claimed in Claim 1, characterised in that the half-shells (7, 8) can be opened on hinges.

11. A testing device as claimed in Claim 1, characterised in that a light-permeable, hinged casing encloses the object to be tested (1) and protects the receiver from pollution and damage.

## Revendications

1. Dispositif de contrôle optique pour la localisation de défauts de surface dans des câbles ou conducteurs, qui comporte une source lumineuse (22) qui éclaire, de manière annulaire, la surface de l'échantillon (1), des demicoques (7, 8) et des photodétecteurs (12, 13), qui saisissent la lumière rétrodiffusée, et dispositif de réception en deux parties étant prévu pour mesurer la directivité de la lumière diffusée, lequel se compose de deux demicoques (7, 8) qui comportent des orifices d'entrée et de sortie destinés à l'échantillon, caractérisé en ce que les deux demi-coques sont séparées l'une de l'autre par des parois (14, 15) entourant radialement l'échantillon, et sont revêtues intérieurement d'une couche dispersive de diffusion, que de plus, une fente de forme annulaire, pour le rayon lumineux de balayage (2, 9), est prévue, radialement à l'échantillon, entre les parois de séparation (14, 15) des demi-coques, et au moins un photodétecteur (12, 13) est disposé, symétriquement par rapport à ces parois, sur chaque face intérieure de la surface des demi-coques et que, en outre, des ouvertures sont ménagées dans les parois de séparation, afin que, près de l'object à contrôler, la lumière diffuse puisse également passer de l'échantillon aux détecteurs, les parois de séparation empêchant le passage d'une demi-coque à l'autre de la lumière diffuse.

2. Dispositif de contrôle selon la revendication 1, caractérisé en ce que plusieurs écrans (10, 11) protègent les photodétecteurs (12, 13), par exemple des photomultiplications, des réflexions lumineuses directes.

3. Dispositif de contrôle selon la revendication 1, caractérisé en ce que pour l'éclairage, on se sert d'un rayon laser (2, 9), qui balaye séquentiellement, et point par point, avec une incidence à peu près radiale, la surface de l'échantillon (1).

4. Dispositif de contrôle selon la revendication 3, caractérisé en ce qu'on prévoit un miroir oscillant (23), qui dirige la lumière successivement vers différents miroirs (24) qui, de leur côté, réfléchissent la lumière presque radialement vers l'échantillon (1).

5. Dispositif de contrôle selon la revendication 4, caractérisé en ce qu'on prévoit des moyens de commutation de l'évaluation, qui déterminent la différance entre les signaux de sortie des photomultiplicateurs (12, 13) et qui délivrent un message d'erreur, au cas où une différence est présente.

6. Dispositif de contrôle selon la revendication 5, caractérisé en ce qu'on prévoit, en tant que moyens de commutation de l'évaluation, un diviseur avec une unité de valeur seuil, connectée en aval, qui compare le signal de sortie du diviseur avec une valeur seuil donnée.

7. Dispositif de contrôle selon la revendication 5, caractérisé en ce qu'on prévoit, en tant que moyens de commutation de l'évaluation, un sous- tracteur avec une unité de valeur seuil, connectée en aval, qui compare le signal de sortie du soustracteur avec une valeur seuil donnée.

8. Dispositif de contrôle selon la revendication 5, caractérisé en ce qu'on prévoit une électronique de régulation qui compare le signal de sortie, moyenné temporellement, des photomultiplicateurs (12, 13) avec une valeur seuil, donnée, et qui, dans le cas d'un écart, ajuste la haute tension, c'est-à-dire l'amplification du photomultiplicateur.

9. Dispositif de contrôle selon la revendication 2, caractérisé en ce que les écrans (16, 17) montés sur les ouvertures d'entrée et de sortie des demi-coques (7, 8), ainsi que les filtres (18, 19) immédiatement devant les photomultiplicateurs (12, 13), protègent ceux-ci de la lumière parasite.

10. Dispositif de contrôle selon la revendication 1, caractérisé en ce que les demi-coques (7, 8) peuvent s'ouvrir.

11. Dispositif de contrôle selon la revendication 1, caractérisé en ce qu'une enveloppe transparente rabattable entoure l'échantillon (1) et protège le récepteur des pollutions et des détériorations.

0 119 565

FIG1

FIG 2

7

FIG 3

FIG 4